# EUROPEAN PATENT APPLICATION

(11) **EP 4 848 896 A1**
(43) Date of publication of application: **02.12.2026**
(21) Application number: 26181703.5
(22) Date of filing: 28.05.2026
(51) Int. Cl.: H05B 6/06, B23K 9/10

(54) **FRONT-END TWO PHASE INTERLEAVED BOOST CONVERTER FOR INDUCTION HEATING APPLICATIONS**

(30) Priority: 30.05.2025 US 202563814874 P; 21.05.2026 US 202619684106
(71) Applicant: Illinois Tool Works Inc., Glenview IL 60025 (US)
(72) Inventor: KHAN, Waqar Ahmed, Glenview 60025 (US); OTT, Brian, Glenview 60025 (US)
(74) Representative: HGF

(57) **Abstract**

Systems and methods are provided for implementing and utilizing front-end two phase interleaved boost converter for induction heating applications. An example induction heating system may include a workpiece heating circuitry configured for providing workpiece thermal functions, and workpiece thermal controller configured for controlling the workpiece thermal functions. The workpiece heating circuitry may include an input rectifier, a boost converter, a power stage, and an output converter. The boost converter may include a boost capacitor. The power stage may include, at least, a full-bridge converter. The output converter may be configured to provide, based on an output voltage of the power stage, power to an output resonant load, for facilitating or supporting the workpiece thermal functions. The workpiece thermal controller may be configured to control power flow to the output resonant load, wherein the controlling comprises setting or adjusting the operation of one or more circuits in the workpiece heating circuitry.

## Description

### CLAIM OF PRIORITY

This patent application claims priority to and claims benefit from United States Provisional Patent Application Serial No. 63/814,874, filed on May 30, 2025. The above identified application is hereby incorporated herein by reference in its entirety.

### BACKGROUND

Welding has become increasingly ubiquitous. Welding may be performed in a manual manner (e.g., being performed by a human), or at least some aspects of it may be performed in an automated manner. Equipment or components used during welding operations may be driven using engines. For example, engines may be used to drive, for example, generators, power sources, etc. used during welding operations.

In some instances, conventional welding-type systems may have some limitations and/or disadvantages. For example, welding-type systems may have limitations with respect to handling heating of workpieces during welding operations.

Further limitations and disadvantages of conventional approaches will become apparent to one skilled in the art, through comparison of such approaches with some aspects of the present systems and methods set forth in the remainder of this disclosure with reference to the drawings.

### BRIEF SUMMARY

Aspects of the present disclosure relate to welding solutions. More specifically, various implementations in accordance with the present disclosure are directed to systems and methods for front-end two phase interleaved boost converter for induction heating applications, substantially as illustrated by or described in connection with at least one of the figures, and as set forth more completely in the claims.

These and other advantages, aspects and novel features of the present disclosure, as well as details of an illustrated implementation thereof, will be more fully understood from the following description and drawings.

### BRIEF DESCRIPTION OF THE DRAWINGS

Fig. 1 shows an example welding-type setup.
Fig. 2 illustrates an example workpiece heating system.
Fig. 3 illustrates an example workpiece heating circuit topology incorporating an interleaved boost converter.
Fig. 4 illustrates a graph of example data of current requirements for different boost conversion schemes.
Fig. 5 illustrates a graph of example data of ratios of current requirements for different boost conversion schemes.
Fig. 6 illustrates an example welding-type setup incorporating an induction heating power source, with workpiece heating circuit topology with an interleaved boost converter, and control subsystem implementing adaptive control scheme for controlling the induction heating power source.

### DETAILED DESCRIPTION

As utilized herein, the terms "circuits" and "circuitry" refer to physical electronic components (e.g., hardware), and any software and/or firmware ("code") that may configure the hardware, be executed by the hardware, and/or otherwise be associated with the hardware. As used herein, for example, a particular processor and memory (e.g., a volatile or non-volatile memory device, a general computer-readable medium, etc.) may comprise a first "circuit" when executing a first one or more lines of code and may comprise a second "circuit" when executing a second one or more lines of code. Additionally, a circuit may comprise analog and/or digital circuitry. Such circuitry may operate, for example, on analog and/or digital signals. It should be understood that a circuit may be in a single device or chip, on a single motherboard, in a single chassis, in a plurality of enclosures at a single geographical location, in a plurality of enclosures distributed over a plurality of geographical locations, etc. Similarly, the term "module" may, for example, refer to a physical electronic components (e.g., hardware) and any software and/or firmware ("code") that may configure the hardware, be executed by the hardware, and/or otherwise be associated with the hardware.

As utilized herein, circuitry or module is "operable" to perform a function whenever the circuitry or module comprises the necessary hardware and code (if any is necessary) to perform the function, regardless of whether performance of the function is disabled or not (e.g., by a user-configurable setting, factory trim, etc.).

As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y, and z." As utilized herein, the term "exemplary" means serving as a non-limiting example, instance, or illustration. As utilized herein, the terms "for example" and "e.g." set off lists of one or more non-limiting examples, instances, or illustrations.

Welding-type power, as used herein, refers to power suitable for welding, plasma cutting, induction heating, CAC-A (carbon arc cutting/air) and/or hot wire welding/preheating (including laser welding and laser cladding). Welding-type power supply, as used herein, refers to a power supply that can provide welding-type power. A welding-type power supply may include power generation components (e.g., engines, generators, etc.) and/or power conversion circuitry to convert primary power (e.g., engine-driven power generation, mains power, etc.) to welding-type power.

Welding-type operations, as used herein, comprise operations in accordance with any known welding technique, including flame welding techniques such as oxy-fuel welding, electric welding techniques such as shielded metal arc welding (e.g., stick welding), metal inert gas welding (MIG), tungsten inert gas welding (TIG), resistance welding, as well as gouging (e.g., carbon arc gouging), cutting (e.g., plasma cutting), brazing, induction heating, soldering, and/or the like.

Welding-type setup, as used herein, refers to any setup comprising welding related devices or equipment (e.g., welding power sources, welding torch, welding gear such as headwear and the like, auxiliary devices or systems, etc.) which are used in facilitating and/or in conjunction with welding-type operations.

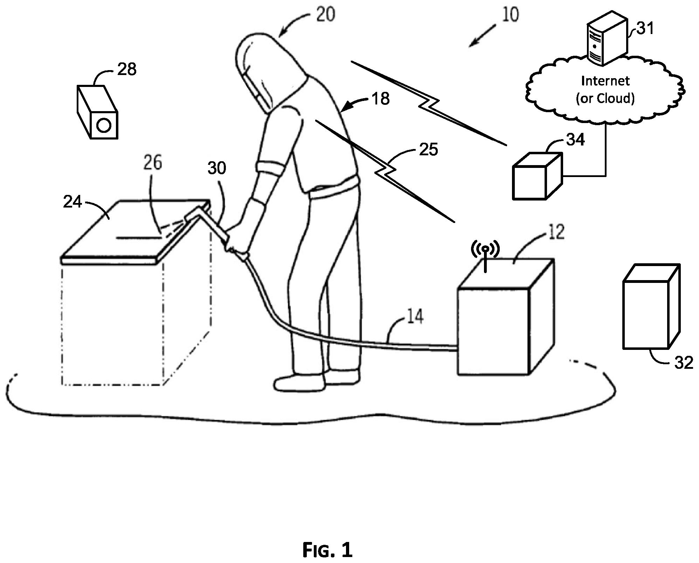

Fig. 1 shows an example welding-type setup. Referring to Fig. 1, there is shown an example welding-type setup 10 in which an operator (user) 18 is wearing welding headwear 20 and welding a workpiece 24 using a torch 30 to which power is delivered by equipment 12 via a conduit 14, with weld monitoring equipment 28, which may be available for use in monitoring welding operations.

The equipment 12 may comprise a power source, optionally a source of a shield gas and, where wire/filler material is to be provided automatically, a wire feeder. Further, in some instances an engine 32 may be used to drive equipment or components used during welding operations. The engine 32 may comprise a gas engine or a liquefied petroleum (LP) engine. The engine 32 may drive generators, power sources, etc. used during welding operations.

The welding-type setup 10 of Fig. 1 may be configured to form a weld joint by any known welding-type technique. For example, optionally in any implementation, the welding equipment 12 may be arc welding equipment that provides a direct current (DC) or alternating current (AC) to a consumable or non-consumable electrode of a torch 30. The electrode delivers the current to the point of welding on the workpiece 24. In the welding-type setup 10, the operator 18 controls the location and operation of the electrode by manipulating the torch 30 and triggering the starting and stopping of the current flow. In other implementations, a robot or automated fixture may control the position of the electrode and/or may send operating parameters or trigger commands to the welding system. When current is flowing, an arc 26 is developed between the electrode and the workpiece 24. The conduit 14 and the electrode thus deliver current and voltage sufficient to create the electric arc 26 between the electrode and the workpiece. The arc 26 locally melts the workpiece 24 and welding wire or rod supplied to the weld joint (the electrode in the case of a consumable electrode or a separate wire or rod in the case of a non-consumable electrode) at the point of welding between electrode and the workpiece 24, thereby forming a weld joint when the metal cools.

Optionally in any implementation, the weld monitoring equipment 28 may be used to monitor welding operations. The weld monitoring equipment 28 may be used to monitor various aspects of welding operations, particularly in real-time (that is as welding is taking place). For example, the weld monitoring equipment 28 may be operable to monitor arc characteristics such as length, current, voltage, frequency, variation, and instability. Data obtained from the weld monitoring may be used (e.g., by the operator 18 and/or by an automated quality control system) to ensure proper welding.

As shown, the equipment 12 and headwear 20 may communicate via a link 25 via which the headwear 20 may control settings of the equipment 12 and/or the equipment 12 may provide information about its settings to the headwear 20. Although a wireless link is shown, the link may be wireless, wired, or optical.

Optionally in any implementation, equipment or components used during welding operations may be driven using engines. For example, the engine 32 may drive generators, power sources, etc. used during welding operations. In some instances, it may be desired to obtain information relating to used engines. For example, data relating to engines (and operations thereof) used during welding operations may be collected and used (e.g., based on analysis thereof) in monitoring and optimizing operations of these engines. The collection and use of such data may be performed telematically-that is, the data may be collected locally, subjected to at least some processing locally (e.g., formatting, etc.), and then may be communicated to remote management entities (e.g., centralized management locations, engine providers, etc.), using wireless technologies (e.g., cellular, satellite, etc.).

Optionally in any implementation, a dedicated controller (e.g., shown as element 34 in Fig. 1) may be used to control, centralize, and/or optimize data handling operations. The controller 34 may comprise suitable circuitry, hardware, software, or any combination thereof for use in performing various aspects of the engine related data handling operations. For example, the controller 34 may be operable to interface with the engine 32 to obtain data related thereto. The controller 34 may track or obtain welding related data (e.g., from weld monitoring equipment 28, from equipment 12, etc.). The controller 34 may then transmit the data (e.g., both engine related and weld related data), such as to facilitate remote monitoring and/or management, by way of wireless communications. This may be done using cellular and or satellite telematics hardware, for example.

In some instances, welding-type systems or setups may be configured to provide workpiece thermal functions. In this regard, as used herein "workpiece thermal functions" may comprise functions relating to heating and/or otherwise setting or adjusting thermal conditions associated with workpieces being worked on in the welding-type systems or setups. The workpiece thermal functions may be performed before, during, and/or after welding operations. In various implementations, providing workpiece thermal functions may comprise generating heating load (or the like), such as based on input voltage, which is then applied to the workpiece(s).

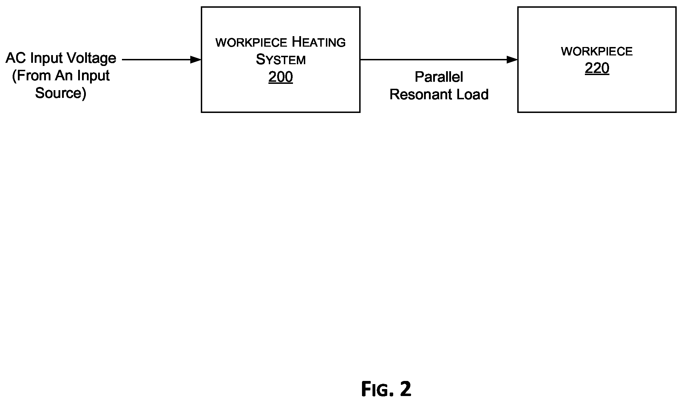

In various implementations, the workpiece thermal functions may be provided via one or more components of the welding-type systems or setups. In this regard, in some implementations, at least one such component may be a dedicated stand-alone component configured for providing and/or otherwise facilitating the workpiece thermal functions. Alternatively or additionally, in some instances, at least one component may be an existing component that is configured to support providing workpiece thermal functions. An example of such component is illustrated and described with respect to Fig. 2.

In various embodiments based on the present disclosure, workpiece thermal functions, and/or operation of components used in providing and/or facilitating providing such functions, may be improved and/or optimized. For example, such improvements may be achieved by improving the design and/or operation of components used in providing and/or facilitating providing such functions, to yield improvement with regard to such parameters or characteristics as cost, reliability, robustness, adaptability, and the like. Example embodiments, and features and/or attributes associated therewith, are described in more detail below.

Fig. 2 illustrates an example workpiece heating system. Shown in Fig. 2 is a workpiece heating system (or simply "workpiece heater") 200.

The workpiece heating system 200 may comprise suitable circuitry and other hardware for providing and/or otherwise facilitating workpiece thermal functions, and control thereof. In this regard, workpiece thermal functions may comprise heating workpieces before, during, and/or after welding.

The workpiece heating system 200 may be configured or implemented as a stand-alone component in a welding-type setup. Alternatively, at least some of the functions workpiece heating system 200 may be performed by existing components of the welding-type setup. Similarly, in some instances, at least some of the circuits and/or components of the workpiece heating system 200 may comprise existing circuits and/or components in the welding-type setup that are merely configured or otherwise utilized to performing at least some of the functions of the workpiece heating system 200.

In example operation, the workpiece heating system 200 may receive input voltage (typically, AC input voltage) from an input source, and may generate based on the input voltage, an output (e.g., parallel resonant load) that is configured for heating a workpiece 220 that is being worked on using the welding-type setup that incorporates the workpiece heating system 200.

In an example implementation, the workpiece heating system 200 may comprise a circuit topology comprising a front-end passive three phase diode rectifier, an insulated gate bipolar transistor (IGBT) based soft-switched full-bridge converter, a high frequency transformer that provides galvanic isolation (along with voltage scaling), and a parallel resonant converter that performs high-frequency switching of the induction heating load.

Conventionally, workpiece heating systems, such as the workpiece heating system 200 may be pre-configured to support particular input voltages or ranges thereof. For example, the workpiece heating system 200 may be implemented as one of two different variants: a first variant designed to support and use input voltage of 575V (for use in locations such as Canada), and a second variant designed to support and use input voltage of 400-480V input voltage (e.g., for use in the US and Europe). Such variants may differ with respect to physical characteristics of certain components thereof. For example, the difference in these variants exist in the turn ratios of the transformer that provides galvanic isolation, so as to provide an identical loading profile of the induction heating load for both variants. Another limitation or issue with conventional workpiece heating systems is with respect to the power factor, which may be low (e.g., around 0.75 or so), which impacts the real power draw from the grid, and thus increases the electricity cost incurred during use of the component.

Solutions based on the present disclosure may be address some of the issues and/or limitations of conventional workpiece heating systems. In this regard, in various embodiments, workpiece heating systems implemented based on the present disclosure may incorporate modified design which may be configured to optimize and/or enhance performance with respect to providing workpiece thermal functions.

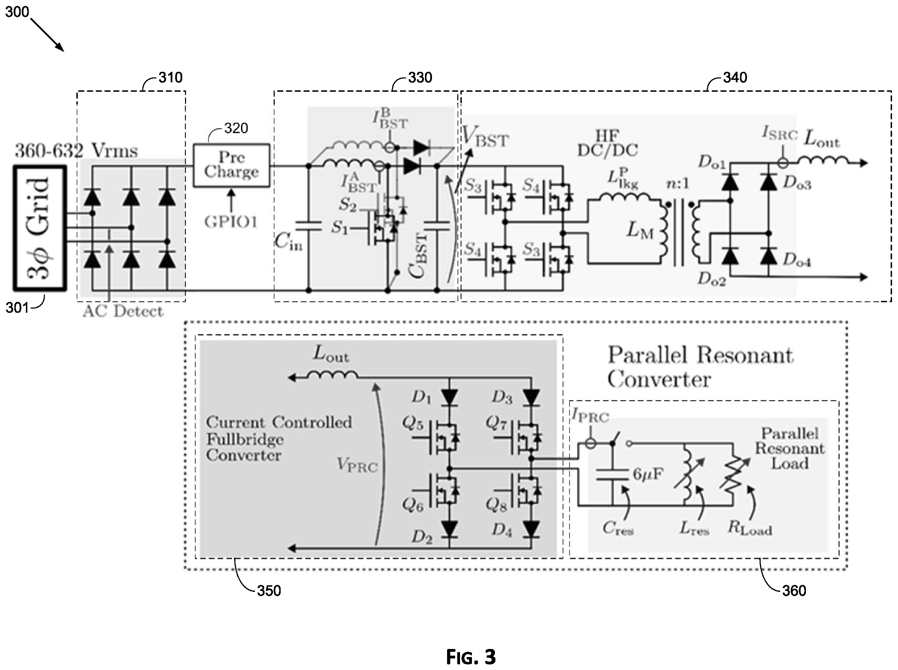

For example, workpiece heating systems implemented based on the present disclosure may incorporate modified circuit topologies that allow for support of different input voltages ranges while also reducing cost, power consumption, and/or heating (in the component itself) and/or increasing robustness and reliability. In various example embodiments, a circuit topology that may comprise a front-end boost converter configured to allow universal use-that is, with various input voltage values or ranges. The use of a front-end boost converter may allow for improving the power factor, and thus the real power draw from the line, which may allow for reducing the electricity cost incurred. In some embodiments the boost converter may be configured and/or implemented as interleaved boost converter, to further enhance performance. Such interleaved boost converter may be implemented as multi-phase interleaved boost converter. An example two-phase interleaved boost converter based implementation is illustrated and described with respect to Fig. 3.

In some instances, improved circuitry technology may also be used to further enhance performance. For example, in various implementations the circuit topology used in the workpiece heating systems may incorporate and leverage use of Silicon-Carbide transistor technology. In this regard, use of silicon-carbide based transistors may allow for further improved performance (e.g., compared to insulated-gate bipolar transistors) as it may allow for faster switching, which in turn may improve power density of the topology, may reduce cost of components, and/or may reduce size/weight of the final product.

Accordingly, solutions based on the present disclosure may address various limitations and/or issues with any existing conventional solutions for controlling workpiece thermal functions. In particular, components implemented based on the present disclosure may be operated under grid conditions in which the input voltages are varying drastically. This may be typical in certain work environments (e.g., shipyards) where the source impedance may be very high and the input voltage may drop considerably, especially under certain conditions (e.g., where multiple high power loads are connected alongside each other). The modifications to circuit topologies used in components implemented based on the present disclosure (e.g., the inclusion of a front-end boost converter) may also improve the power factor (e.g., up to >0.90), thus improving the real power draw from the grid. This may allow for delivering more real power over the same line capacity at the worksite and/or may reduce the cost of electricity charges incurred during welding operations.

Fig. 3 illustrates an example workpiece heating circuit topology incorporating an interleaved boost converter. Shown in Fig. 3 is a workpiece heating circuit topology (or simply "workpiece heating circuitry") 300 which may be utilized or otherwise implemented in a workpiece heating system, such as the workpiece heating system of Fig. 2.

The workpiece heating circuit topology 300 comprises suitable circuitry for providing and/or otherwise facilitating the workpiece thermal functions. In this regard, the workpiece heating circuit topology 300 represents a modified circuit topology, implemented as an example embodiment based on the present disclosure, for providing improved workpiece heating system, as described herein. In particular, the workpiece heating circuit topology 300 incorporates a boost converter based design. Further, the workpiece heating circuit topology 300 may incorporate improved transistor technology (e.g., SiC based transistors) while may allow for enhanced operation compared to other transistors technologies that may be used in conventional solutions.

As shown, the workpiece heating circuit topology 300 comprises an input rectifier 310, a pre-charge circuit 320, a boost converter 330, a power stage 340, and a parallel resonant converter 350. Also, shown is a parallel resonant load 360. In this regard, at least a portion of the parallel resonant load 360 may be a part of the workpiece heating circuit topology 300 itself as described below.

The input rectifier 310 may be configured to convert an AC input voltage from an input source into a first DC voltage that is then provided to the boost converter 330. For example, as shown in the workpiece heating circuit topology 300, the input rectifier 310 comprises a three-phase diode rectifier that converts a three-phase AC input voltage into a first DC voltage. Nonetheless, the disclosure is not limited to such design, and any suitable design (e.g., a single-phase diode rectifier) may be used. The input voltages may vary between 400-575 *Vᵣₘₛ* (± 10% high/low line).

The pre-charge circuit 320 may be configured to control the rate at which the DC-link capacitor(s) in the boost converter 330 (also referred as "boost capacitor" and shown as C_{BST} in Fig. 3) are charged, such as during boost conversion start-up.

The boost converter 330 may be configured to convert the first DC voltage into a second DC voltage-namely, a boosted output voltage *V_{BST}.* The boosted output voltage *V_{BST}* may be at or above a pre-determined voltage level. The boost converter 330 may comprise a boost capacitor (*C_{BST}*)*.* In some instances, the boost converter 330 may also comprise an input capacitor (*Cᵢₙ*). In some instances, one or both of the input capacitor *Cᵢₙ* and the boost capacitor *C_{BST}* comprises a film capacitor.

In some instances, the boost converter 330 is implemented as an interleaved boost converter. In this regard, use of interleaved boost converter may offer various benefits and/or advantages, such as reducing amount of capacitance, allowing for use of few capacitors, allowing for use of better capacitor technology (e.g., film technology), yields more efficient performance, improves longevity and robustness of product (e.g., due to use of film capacitors, lower power factor, etc.), and/or allows for supporting of multiple different input voltage values/ranges. The interleaved boost converter may be a non-synchronous interleaved boost converter, or, alternatively, a synchronous interleaved boost converter.

In some instances, the interleaved boost converter may be implemented as a multi-phase interleaved boost converter. In this regard, the multi-phase interleaved boost converter may comprise a plurality of boost branches between an input-side and an output-side of the boost converter 330. At least one boost branch comprises a boost switch diode.

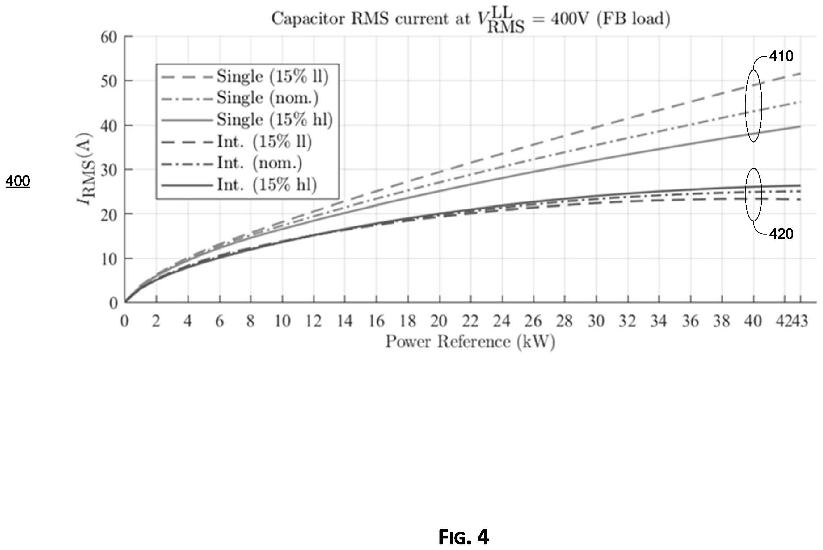

As shown in Fig. 3, the boost converter 330 is implemented as a non-synchronous two-phase interleaved boost converter, incorporating two boost branches input-side and an output-side, each of which comprising an inductor and a diode (with corresponding boost currents ${I}_{BST}^{A}$ and ${I}_{BST}^{B}$ passing therethrough). Such two-phase design may allow for reducing the capacitance requirements on the DC-link (e.g., by almost 1.5 times) compared to a conventional boost converters. This is shown and described in more detail with respect to Figs. 4-5.

The boost converter 330 may comprise one or more boost switches. The one or more boost switches are arranged into a plurality of branches within the boost converter. For example, in two-phase interleaved boost converter, the one or more boost switches may be arranged into two legs within the boost converter (as shown in Fig. 3). In interleaved based implementations, at least one boost switch may connect to mid-point within each boost branch (as shown in Fig. 3).

At least one boost switch may comprise a boost switch transistor. The boost switch transistor may comprise a diode connected between two non-gate terminals of the full boost switch transistor-e.g., between a source terminal and a drain terminal of a metal-oxide-semiconductor field-effect transistor (MOSFET).

The power stage 340 may be configured to provide isolation (e.g., galvanic isolation) between the boost converter 330 and the remaining portion of the workpiece heating circuit topology 300 (in particular the parallel resonant converter 350), and to control output power flow (e.g., via voltage *V_{PRC}* applied to the parallel resonant converter 350) and thus the heating of the induction load.

The power stage 340 may comprise, e.g., a power stage input circuit, an isolation circuit, and a power stage output circuit. For example, as shown in Fig. 3, the power stage 340 comprises a full-bridge converter (as input circuit), an isolation transformer, and a full-bridge diode rectifier (as output circuit). In this regard, the full-bridge converter may be configured to operate at a high switching frequency, to apply voltage in particular manner (e.g., square wave voltage pulse-width modulation (PWM) pulses) to the isolation transformer, which has a particular turn ratio (n:1).

The full-bridge converter may comprise one or more power stage input switches connected between a low-side and a high-side of the full-bridge converter. At least one power stage input switch may comprise a power stage input switch transistor. The power stage input switch transistor may comprise a diode connected between two non-gate terminals of the power stage input switch transistor-e.g., between a source terminal and a drain terminal of a metal-oxide-semiconductor field-effect transistor (MOSFET). In some instances, the power stage input switches may be arranged into a plurality of legs between the low-side and the high-side of the full-bridge converter (e.g., two as shown in Fig. 3). In one implementation, at least one leg may comprise at least a first power stage input switch at the low-side of the full-bridge converter and a second power stage input switch at the high-side of the full-bridge converter.

The full-bridge diode rectifier may comprise one or more power stage output switches connected between a low-side and a high-side of the full-bridge diode rectifier. For example, the power stage output switches may comprise diodes. In some instances, the power stage output switches may be arranged into a plurality of legs between the low-side and the high-side of the full-bridge diode rectifier (e.g., two as shown in Fig. 3). In one implementation, at least one leg may comprise at least a first power stage output switch at the low-side of the full-bridge diode rectifier and a second power stage output switch at the high-side of the full-bridge diode rectifier.

In some instances, transistors used in the power stage 340 may be implemented as Silicon-Carbide (SiC) based transistors (e.g., instead of IGBT based transistors).

In some instances, the power stage 340 may be configured for hard-switching rather than soft-switching. The use of the power stage 340 may allow for eliminating resonance capacitors.

The parallel resonant converter 350 may be configured to provide an output current (*I_{PRC}*) to the parallel resonant load 360 based on output of the power stage 340 (*V_{PRC}*)*,* to facilitating applying the induction based heating. For example, as shown in Fig. 3, the parallel resonant converter 350 comprises a full-bridge converter that commutates the output current *I_{PRC}* to feed the supply power to the parallel resonant load 360. Since such full-bridge converter is a current-controlled topology, an inductor *Lout* may be required to converter the controllable output voltage of the full-bridge converter into a controllable current-source. The switching frequency of the converter may be between 5-30 kHz, and it may operate via zero voltage switching

The parallel resonant converter 350 may comprise one or more parallel resonant switches connected between a low-side and a high-side of the parallel resonant converter 350. In this regard, each parallel resonant switch may comprise an parallel resonant switch transistor or an parallel resonant switch diode. At least one parallel resonant switch transistor may comprise a diode connected between two non-gate terminals of the parallel resonant switch transistor-e.g., between a source terminal and a drain terminal of a metal-oxide-semiconductor field-effect transistor (MOSFET).

In some instances, at least some of the transistors may be of different type compared to other transistors in the parallel resonant converter 350.

In some instances, the parallel resonant converter 350 may comprise one or more parallel resonant diodes connected between the low-side and the high-side of the parallel resonant converter 350. In some instances, the parallel resonant switches and/or diodes may be arranged into a plurality of legs between the low-side and the high-side of the parallel resonant converter 350 (e.g., two legs as shown in Fig. 3).

For example, as shown in Fig. 3, the parallel resonant converter 350 comprises a pair of (two) legs between the low-side and the high-side of the parallel resonant converter 350, with each comprising a pair of diodes and a pair of switch transistors.

The parallel resonant load 360 is configured to be applied at the workpiece-that is, as induction load, to facilitate applying of heat and/or thermal conditions thereto. For example, as shown in Fig. 3, the parallel resonant load 360 may comprise a resonant load capacitor *Cᵣₑₛ* (within the system), induction coils *Lᵣₑₛ* (at the workpiece), and a resonant load resistance *R_{load}* (at the workpiece). Various aspects and/or characteristics of these components may be dependent on the particular use case. For example, implementation and/or applying of the induction coils *Lᵣₑₛ* may be dependent on how the output cables are wrapped around the workpiece to be heated. The resonant load resistance *Rload* may be dependent on the composition of the workpiece material and the coupling between the workpiece and the induction coils.

In some instances, at least some of the transistors used within the workpiece heating circuit topology 300 as a whole, and/or even within same component, may be of different types.

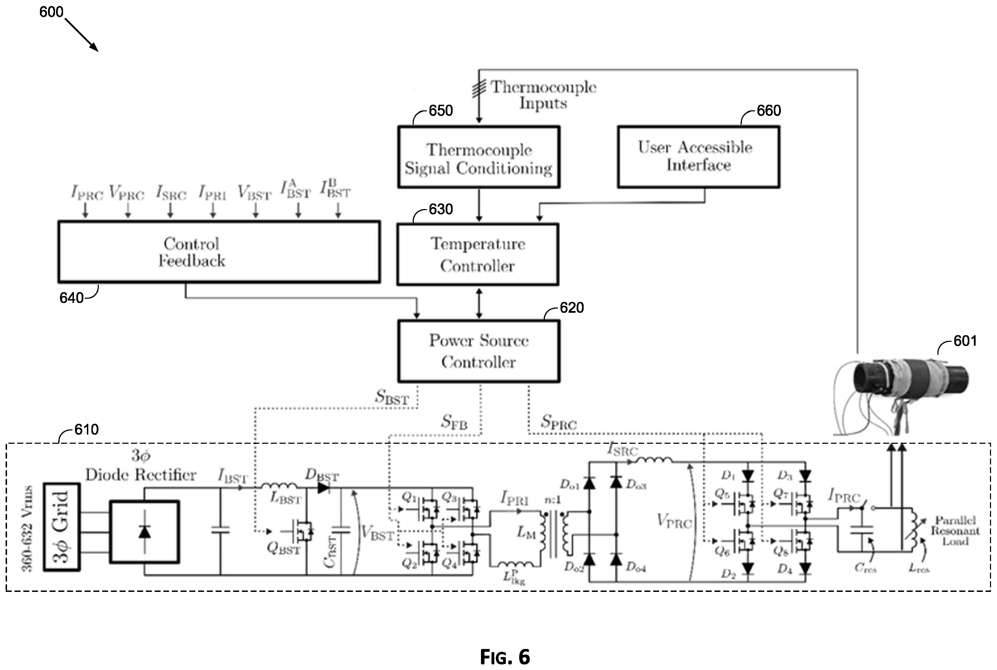

A high level control scheme of the power converter is shown in Figure 6. The induction heating system is configured to received temperature feedback information from a plurality of temperature feedback devices.

Providing workpiece thermal functions may be adaptively controlled, such as based on various parameters and/or conditions that may be pertinent to the workpiece thermal functions. These may include thermal conditions associated with the heating of the workpiece, operational parameters associated with the system, and the like. Accordingly, in some instances, pre-set control schemes may be used in setting and/or adjusting operations of workpiece heating systems. For example, such control schemes may be used to set and/or adjust control parameters and/or signals that are used in controlling various elements in the circuit topology (e.g., the workpiece heating circuit topology 300) used in the workpiece heating system. An example use of such control is described in more detail with respect to Fig. 6.

Fig. 4 illustrates a graph of example data of current requirements for different boost conversion schemes. Shown in Fig. 4 is graph 400

As shown, the graph 400 comprises data representing root mean square (RMS) current (*Iᵣₘₛ*) in A (y-axis) as function of power references in kW (x-axis). In particular, the graph 400 shows RMS current requirements for the DC-link (output) capacitor for both of a conventional (single) interleaved boost converter and a two-phase interleaved boost converter (e.g., the boost converter 330 as illustrated in Fig. 3), for a particular input voltage (e.g., *Vᵢₙ* = 540 V).

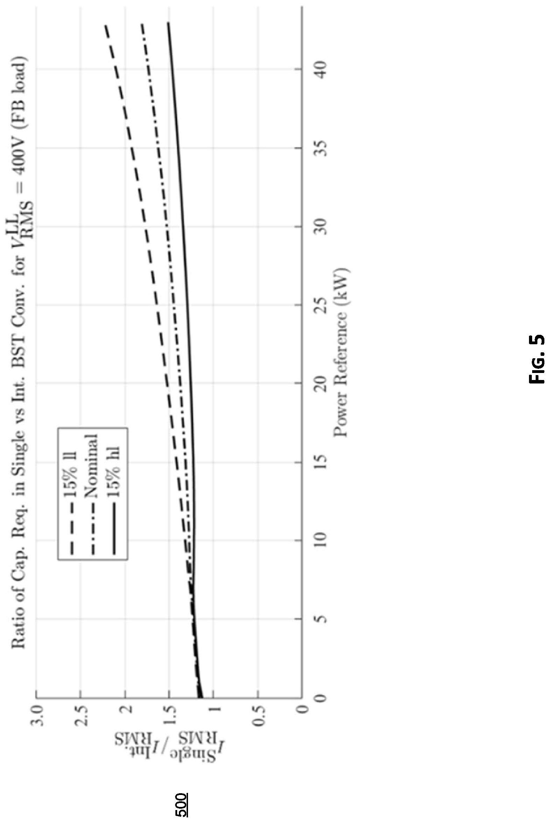

In this regard, the graph 400 comprises plots 410 and 420 corresponding to, respectively, the single and two-phase interleaved boost converter based implementations, with each of these two plots comprising 3 sub-plots, representing current requirements at, respectively, 15% low-low (ll), normal, and 15% high-low (hl). As illustrated by the graph 400 (and particularly by the plots 410 and 420 therein), use of two-phase interleaved boost converter allows for reduction in the RMS current flowing into the output capacitor (by a factor of almost 50%). This is illustrated more clearly in Fig. 5.

Fig. 5 illustrates a graph of example data of ratios of current requirements for different boost conversion schemes. Shown in Fig. 5 is graph 500

As shown, the graph 500 comprises data representing ratio of root mean square (RMS) current (*Iᵣₘₛ*) for single conventional boost to root mean square (RMS) current (*Iᵣₘₛ*) of a two-phase interleaved boost converter (y-axis) as function of power references in kW (x-axis). The graph 500 shows ratio(s) of RMS current requirements for the DC-link (output) capacitor for both of a conventional (single) interleaved boost converter and a two-phase interleaved boost converter (e.g., the boost converter 330 as illustrated in Fig. 3), for a particular input voltage (e.g., *Vᵢₙ* = 540 V). In particular, the graph 500 comprises 3 plots showing the ratio(s) between the corresponding sub-plots-that is, each of the sub-plots of the plots 410 and 420 of Fig. 4, corresponding to current requirements at, respectively, 15% low-low (ll), normal, and 15% high-low (hl).

As noted above, with respect to Fig. 4, the graph 500 clearly illustrates the improvement that use of two-phase interleaved boost converter may yield-namely, with respect to allowing for reduction in RMS current (that is, the RMS current flowing into the output capacitor) by a factor of almost 50% in some instances. Such reduction in RMS current requirements allows for reducing capacitance requirements of the system (and thus, e.g., fewer capacitors), which in turn may allow for reduction in cost, reduction in heat, and improvement in longevity and robustness of the system.

Fig. 6 illustrates an example welding-type setup incorporating an induction heating power source, with workpiece heating circuit topology with an interleaved boost converter, and control subsystem implementing adaptive control scheme for controlling the induction heating power source. Shown in Fig. 6 is welding-type setup 600 substantially similar to the welding-type setups described herein.

The welding-type setup 600 comprises an induction heating power source 610 incorporating a workpiece heating circuit topology based on present disclosure. In this regard, as shown the induction heating power source 610 uses a workpiece heating circuit topology that is substantially similar to the workpiece heating circuit topology 300 of Fig. 3.

The welding-type setup 600 further comprises various components that may be used in supporting the workpiece heating functions, particularly as provided by the workpiece heating circuit topology 300, and particularly in controlling these functions and/or in obtaining data (e.g., sensory data) required for facilitating such controlling. For example, as shown in Fig. 6, the welding-type setup 600 comprises a power source controller (PSC) 620, a temperature controller 630, a control feedback circuit 640, a thermocouple signal conditioning circuit 650, and a user accessible interface (or simply "user interface") component 660. Each of these components comprises suitable circuitry and/or other hardware resources for performing the operations and/or functions performed thereby.

In operation, the welding-type setup 600 may be configured for providing workpiece heating, and further in implementing a control scheme for controlling the workpiece heating, in accordance with an example implementation. For example, the induction heating power source 610 is configured to received temperature feedback information from a plurality of temperature feedback devices. For example, the temperature feedback devices comprise multiple thermocouples that are spot welded on a workpiece 601 that forms the induction heating load. Such thermocouples may facilitate the heating of the workpiece 601 to a desired temperature and/or at a desired rate of temperature change.

The temperature controller 630 compares the actual temperature of the workpiece 601 represented by temperature feedback, to a desired temperature which may be set by the user, such as via the user accessible interface 660. Further, the thermocouple signal conditioning circuit 650 may condition inputs from the thermocouples to ensure that these inputs may be received and processed by the temperature controller 630.

The temperature controller 630 provides to the power source controller (PSC) 620 a control signal that is representative of the desired output of the induction heating power source 610 to make the actual temperature of the workpiece 601 equal to desired temperature.

The power source controller (PSC) 620 controls the operation of the induction heating power source 610, such as to adjust the output power of the induction heating power source 610. The controlling may be done by generating control signals for setting or adjusting operation of various components of the induction heating power source 610. For example, the controlling may be accomplished by increasing or decreasing the duty cycle or the ON/OFF time (e.g., dictated by signals *S_{FB}*) of the switches (e.g., SiC MOSFETs switches) of the full-bridge converter. In this regard, the higher the ON time of the MOSFET switches, the more power will be transferred by the induction heating power source 610 to the resonant heating load. Similarly, the induction heating power source 610 may use control signal *S_{BST}* to control operation of the boost converter, and/or may use control signal *S_{PRC}* to control operation of the parallel resonant converter.

The frequency of the parallel resonant load may be determined via a start-up algorithm. Once the frequency is detected the parallel resonant converter begins increasing its switching frequency from startup frequency of 5 kHz until the load frequency is achieved. Once the frequency is attained, the power output to the resonant load is controlled by varying the duty cycle of the full-bridge converter.

The power source controller (PSC) 620 may also limit or reduce the output of the induction heating power source 610 based on various operational parameters of the system (e.g., one or more of the various currents and/or voltages associated with the circuit topology used in the induction heating power source 610, as shown in Fig. 6). In this regard, the control feedback circuit 640 may obtain the operational parameters, and may then provide to the power source controller (PSC) 620 a control signal representative of the obtained operational parameters. The power source controller (PSC) 620 may be configured to limit the output power of the system when one of the operational parameters is achieved or exceeds a corresponding threshold. This limits the potential damage to internal components.

Accordingly, solutions based on the present disclosure may have various advantages, beyond the benefits already described above. For example, regardless of the varying AC input voltages, the front-end interleaved boost converter may allow for maintaining a constant voltage on the DC voltage bus. This may simplify the design of the isolation transformer that provides galvanic isolation between the grid side and the parallel resonant load. Compared to conventional implementations where no front-end boost converter is used, transformers of difference turn ratios may be required to maintain a constant loading profile of the parallel resonant current commutator which increases the cost and complexity. This simplification also results in ease of maintenance from supporting engineering team.

Another advantage is that the use of a multi-phase interleaved boost converter (e.g., two-phase interleaved boost converter) may permit equal distribution of power among the multiple phases (e.g., the two phases when using two-phase interleaved boost converter). This may allow for simplifying the circuit layout (e.g., printed circuit board (PCB) layout) and for distributing the power losses among particular certain components (e.g., transistors) which aids in the cooling system design.

Another advantage is that the use of a multi-phase interleaved boost converter (e.g., two-phase interleaved boost converter) may provide increased (e.g., twice) switching frequency ripple on the DC bus capacitors. This may allow for reducing the capacitance requirements, which in turn reduces the size and weight of the product. It also may allow for reducing the RMS current ripple through the DC link capacitors which impacts the self-heating of the DC link capacitors particularly when the converter duty ratios are near 50%.

Another advantage is that an induction heating load is quite slow in terms of dynamics compared to a welding load. As such, instead of providing full output power at first converter pulse (step load response), an induction heating load may be ramped up at a controlled rate (e.g., by ramping the duty cycle of the full-bridge converter). This may allow for reducing the bulk capacitance-that is, energy stored in the DC bus- required on the DC link, which in turn allows the use of better capacitor technology, such as film capacitor technology. In this regard, film capacitors may have reduced energy density but are available in higher voltage ratings compared to the electrolytic capacitor counterparts. Further, the use of an interleaved boost converter may allow for increasing the DC bus voltage (e.g., to 940V), which allows the use of higher rated film capacitors (e.g., 1000V rated film capacitors).

A stacked DC bus may be required if 500-600V electrolytic capacitors are being used. The entire DC bus voltage may need to be balanced passively through bleed resistors. The use of 1000V film capacitors allows the design of an un-stacked DC bus which reduces component count and provides simplicity. Use of such film capacitors may be advantageous, as it has a lower equivalent series resistance (ESR) than electrolytic capacitors which allows them to handle higher RMS current without excessive heating. In addition, the film capacitors may be more reliable then electrolytic capacitors which may increase the lifetime of the product.

An example induction heating system, in accordance with the present disclosure, comprises: a workpiece heating circuitry configured for providing workpiece thermal functions in the induction heating system, the workpiece heating circuitry comprising: an input rectifier; a boost converter; a power stage comprising, at least, a full-bridge converter; and an output converter; and a workpiece thermal controller configured for controlling the workpiece thermal functions; wherein the boost converter comprises a boost capacitor; wherein the input rectifier is configured to convert an AC input voltage from an input source into a first DC voltage that is provided to the boost converter; wherein the boost converter is configured to boost the first DC voltage into a second DC voltage above a pre-determined voltage level; wherein the power stage is configured to generate based on the second DC voltage, an output voltage for controlling power output of the output converter; wherein the output converter is configured to provide, based on the output voltage, power to an output resonant load, for facilitating or supporting the workpiece thermal functions; and wherein the workpiece thermal controller is configured to control power flow to the output resonant load, wherein the controlling comprises setting or adjusting the operation of one or more circuits in the workpiece heating circuitry.

In an example embodiment, the workpiece heating circuitry comprises a plurality of transistors and/or diodes.

In an example embodiment, the plurality of transistors and/or diodes comprises one or more Silicon-Carbide (SiC) based transistors.

In an example embodiment, the workpiece heating circuitry further comprises a pre-charge circuit disposed before the boost converter.

In an example embodiment, the pre-charge circuit is configured to control a rate of charging of the boost capacitor during boost conversion start-up.

In an example embodiment, the input rectifier comprises a three-phase input rectifier, and wherein the three-phase input rectifier is configured to convert a three-phase AC input voltage from a three-phase input grid into the first DC voltage.

In an example embodiment, the boost converter comprises an interleaved boost converter.

In an example embodiment, the interleaved boost converter comprises a non-synchronous interleaved boost converter.

In an example embodiment, the interleaved boost converter comprises a synchronous interleaved boost converter.

In an example embodiment, the interleaved boost converter comprises a two-phase interleaved boost converter.

In an example embodiment, the boost converter comprises an input capacitor.

In an example embodiment, one or both of the input capacitor and the boost capacitor comprises a film capacitor.

In an example embodiment, the boost converter comprises a plurality of boost branches between an input-side and an output-side of the boost converter.

In an example embodiment, at least one boost branch comprises a boost switch diode.

In an example embodiment, the boost converter comprises one or more boost switches.

In an example embodiment, at least one boost switch comprises a boost switch transistor.

In an example embodiment, the boost switch transistor comprises a diode, and wherein the diode is connected between two non-gate terminals of the boost switch transistor.

In an example embodiment, the one or more boost switches are arranged into at least two branches within the boost converter.

In an example embodiment, the full-bridge converter is configured to operate at a pre-determined switching frequency, to apply pulse-width modulation (PWM) pulses.

In an example embodiment, the full-bridge converter comprises one or more power stage input switches connected between a low-side and a high-side of the full-bridge converter.

In an example embodiment, at least one power stage input switch comprises a power stage input switch transistor.

In an example embodiment, the power stage input switch transistor comprises a diode, and wherein the diode is connected between two non-gate terminals of the power stage input switch transistor.

In an example embodiment, the full-bridge converter comprises a plurality of power stage input switches arranged into at least two legs between the low-side and the high-side of the full-bridge converter.

In an example embodiment, at least one leg comprises at least a first power stage input switch at the low-side of the full-bridge converter and a second power stage input switch at the high-side of the full-bridge converter.

In an example embodiment, the power stage further comprises a full-bridge diode rectifier.

In an example embodiment, the full-bridge diode rectifier comprises one or more power stage output switches connected between a low-side and a high-side of the full-bridge diode rectifier.

In an example embodiment, at least one power stage output switch comprises a power stage output switch diode.

In an example embodiment, the full-bridge diode rectifier comprises a plurality of power stage output switches arranged into at least two legs between the low-side and the high-side of the full-bridge diode rectifier.

In an example embodiment, at least one leg comprises at least a first power stage output switch at the low-side of the full-bridge diode rectifier and a second power stage output switch at the high-side of the full-bridge diode rectifier.

In an example embodiment, the output converter comprises a parallel resonant converter.

In an example embodiment, the parallel resonant converter is configured to provide high frequency pulses to the output resonant load.

In an example embodiment, the output converter comprises one or more output switches connected between a low-side and a high-side of the output converter.

In an example embodiment, at least one output switch comprises an output switch transistor.

In an example embodiment, the output switch transistor comprises a diode, and wherein the diode is connected between two non-gate terminals of the output switch transistor.

In an example embodiment, at least one output switch comprises an output switch diode.

In an example embodiment, the output converter comprises a plurality of output switches arranged into at least two legs between a low-side and a high-side of the output converter.

In an example embodiment, at least one leg comprises at least a first output switch at the low-side of the output converter and a second output switch at the high-side of the output converter.

In an example embodiment, the workpiece thermal controller is configured to generate one or more control signals configured for controlling operation of one or more of the boost converter, the power stage, and the output converter.

In an example embodiment, the workpiece thermal controller is configured to generate at least one control signal based on operational parameters of the induction heating system.

In an example embodiment, the workpiece thermal controller is configured to generate at least one control signal based on thermal feedback information associated with applying of the workpiece thermal functions.

In an example embodiment, the induction heating system further comprises thermal sensory devices configured for obtaining at least a portion of the thermal feedback information.

Other implementations in accordance with the present disclosure may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the processes as described herein.

Accordingly, various implementations in accordance with the present disclosure may be realized in hardware, software, or a combination of hardware and software. The present disclosure may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip.

Various implementations in accordance with the present disclosure may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present disclosure has been described with reference to certain implementations, it will be understood by those skilled in the art that various changes may be made and equivalents may be substituted without departing from the scope of the present disclosure. For example, block and/or components of disclosed examples may be combined, divided, re-arranged, and/or otherwise modified. In addition, many modifications may be made to adapt a particular situation or material to the teachings of the present disclosure without departing from its scope. Therefore, it is intended that the present disclosure not be limited to the particular implementation disclosed, but that the present disclosure will include all implementations falling within the scope of the appended claims.

Various embodiments of the invention are described in the following Clauses.

Clause 1. An induction heating system, comprising:
a workpiece heating circuitry configured for providing workpiece thermal functions in the induction heating system, the workpiece heating circuitry comprising:
an input rectifier;
a boost converter;
a power stage comprising, at least, a full-bridge converter; and
an output converter; and
a workpiece thermal controller configured for controlling the workpiece thermal functions; wherein the boost converter comprises a boost capacitor;
wherein the input rectifier is configured to convert an AC input voltage from an input source into a first DC voltage that is provided to the boost converter;
wherein the boost converter is configured to boost the first DC voltage into a second DC voltage above a pre-determined voltage level;
wherein the power stage is configured to generate based on the second DC voltage, an output voltage for controlling power output of the output converter;
wherein the output converter is configured to provide, based on the output voltage, power to an output resonant load, for facilitating or supporting the workpiece thermal functions; and
wherein the workpiece thermal controller is configured to control power flow to the output resonant load, wherein the controlling comprises setting or adjusting the operation of one or more circuits in the workpiece heating circuitry.

Clause 2. The induction heating system according to Clause 1, wherein the workpiece heating circuitry comprises a plurality of transistors and/or diodes.

Clause 3. The induction heating system according to Clause 1, wherein the workpiece heating circuitry further comprises a pre-charge circuit disposed before the boost converter.

Clause 4. The induction heating system according to Clause 3, wherein the pre-charge circuit is configured to control a rate of charging of the boost capacitor during boost conversion start-up.

Clause 5. The induction heating system according to Clause 1, wherein the input rectifier comprises a three-phase input rectifier, and wherein the three-phase input rectifier is configured to convert a three-phase AC input voltage from a three-phase input grid into the first DC voltage.

Clause 6. The induction heating system according to Clause 1, wherein the boost converter comprises an interleaved boost converter.

Clause 7. The induction heating system according to Clause 6, wherein the interleaved boost converter comprises a non-synchronous interleaved boost converter.

Clause 8. The induction heating system according to Clause 6, wherein the interleaved boost converter comprises a synchronous interleaved boost converter.

Clause 9. The induction heating system according to Clause 6, wherein the interleaved boost converter comprises a multi-phase interleaved boost converter.

Clause 10. The induction heating system according to Clause 1, wherein the boost converter comprises an input capacitor.

Clause 11. The induction heating system according to Clause 10, wherein one or both of the input capacitor and the boost capacitor comprises a film capacitor.

Clause 12. The induction heating system according to Clause 1, wherein the boost converter comprises a plurality of boost branches between an input-side and an output-side of the boost converter.

Clause 13. The induction heating system according to Clause 1, wherein the boost converter comprises one or more boost switches.

Clause 14. The induction heating system according to Clause 1, wherein the full-bridge converter is configured to operate at a pre-determined switching frequency, to apply pulse-width modulation (PWM) pulses.

Clause 15. The induction heating system according to Clause 1, wherein the full-bridge converter comprises one or more power stage input switches connected between a low-side and a high-side of the full-bridge converter.

Clause 16. The induction heating system according to Clause 1, wherein the full-bridge converter comprises a plurality of power stage input switches arranged into at least two legs between the low-side and the high-side of the full-bridge converter.

Clause 17. The induction heating system according to Clause 1, wherein the power stage further comprises a full-bridge diode rectifier.

Clause 18. The induction heating system according to Clause 17, wherein the full-bridge diode rectifier comprises one or more power stage output switches connected between a low-side and a high-side of the full-bridge diode rectifier.

Clause 19. The induction heating system according to Clause 1, wherein the output converter comprises a parallel resonant converter.

Clause 20. The induction heating system according to Clause 1, wherein the output converter comprises one or more output switches connected between a low-side and a high-side of the output converter.

Clause 21. The induction heating system according to Clause 1, wherein the workpiece thermal controller is configured to generate one or more control signals configured for controlling operation of one or more of the boost converter, the power stage, and the output converter.

Clause 22. The induction heating system according to Clause 21, wherein the workpiece thermal controller is configured to generate at least one control signal based on operational parameters of the induction heating system.

Clause 23. The induction heating system according to Clause 21, wherein the workpiece thermal controller is configured to generate at least one control signal based on thermal feedback information associated with applying of the workpiece thermal functions.

Clause 24. The induction heating system according to Clause 1, wherein the power stage further comprises an isolation transformer, and wherein the isolation transformer is configured to provide isolation between the boost converter and the output converter.

## Claims

1. An induction heating system, comprising:
a workpiece heating circuitry configured for providing workpiece thermal functions in the induction heating system, the workpiece heating circuitry comprising:
an input rectifier;
a boost converter;
a power stage comprising, at least, a full-bridge converter; and
an output converter; and
a workpiece thermal controller configured for controlling the workpiece thermal functions;
wherein the boost converter comprises a boost capacitor;
wherein the input rectifier is configured to convert an AC input voltage from an input source into a first DC voltage that is provided to the boost converter;
wherein the boost converter is configured to boost the first DC voltage into a second DC voltage above a pre-determined voltage level;
wherein the power stage is configured to generate based on the second DC voltage, an output voltage for controlling power output of the output converter;
wherein the output converter is configured to provide, based on the output voltage, power to an output resonant load, for facilitating or supporting the workpiece thermal functions; and
wherein the workpiece thermal controller is configured to control power flow to the output resonant load, wherein the controlling comprises setting or adjusting the operation of one or more circuits in the workpiece heating circuitry.

2. The induction heating system according to claim 1, wherein the workpiece heating circuitry comprises a plurality of transistors and/or diodes.

3. The induction heating system according to claim 1, wherein the workpiece heating circuitry further comprises a pre-charge circuit disposed before the boost converter, and optionally wherein the pre-charge circuit is configured to control a rate of charging of the boost capacitor during boost conversion start-up.

4. The induction heating system according to claim 1, wherein the input rectifier comprises a three-phase input rectifier, and wherein the three-phase input rectifier is configured to convert a three-phase AC input voltage from a three-phase input grid into the first DC voltage.

5. The induction heating system according to claim 1, wherein the boost converter comprises an interleaved boost converter, and optionally wherein the interleaved boost converter comprises a non-synchronous interleaved boost converter, or a synchronous interleaved boost converter, or a multi-phase interleaved boost converter.

6. The induction heating system according to claim 1, wherein the boost converter comprises an input capacitor, and optionally wherein one or both of the input capacitor and the boost capacitor comprises a film capacitor.

7. The induction heating system according to claim 1, wherein the boost converter comprises a plurality of boost branches between an input-side and an output-side of the boost converter.

8. The induction heating system according to claim 1, wherein the boost converter comprises one or more boost switches.

9. The induction heating system according to claim 1, wherein the full-bridge converter is configured to operate at a pre-determined switching frequency, to apply pulse-width modulation (PWM) pulses.

10. The induction heating system according to claim 1, wherein the full-bridge converter comprises one or more power stage input switches connected between a low-side and a high-side of the full-bridge converter.

11. The induction heating system according to claim 1, wherein the full-bridge converter comprises a plurality of power stage input switches arranged into at least two legs between the low-side and the high-side of the full-bridge converter.

12. The induction heating system according to claim 1, wherein the power stage further comprises a full-bridge diode rectifier, and optionally wherein the full-bridge diode rectifier comprises one or more power stage output switches connected between a low-side and a high-side of the full-bridge diode rectifier.

13. The induction heating system according to claim 1, wherein the output converter comprises a parallel resonant converter, and/or one or more output switches connected between a low-side and a high-side of the output converter.

14. The induction heating system according to claim 1, wherein the workpiece thermal controller is configured to generate one or more control signals configured for controlling operation of one or more of the boost converter, the power stage, and the output converter, and optionally wherein the workpiece thermal controller is configured to generate at least one control signal based on operational parameters of the induction heating system, or based on thermal feedback information associated with applying of the workpiece thermal functions.

15. The induction heating system according to claim 1, wherein the power stage further comprises an isolation transformer, and wherein the isolation transformer is configured to provide isolation between the boost converter and the output converter.
